# EUROPEAN PATENT APPLICATION

(11) **EP 4 556 758 A1**
(43) Date of publication of application: **21.05.2025**
(21) Application number: 23939204.6
(22) Date of filing: 25.09.2023
(51) Int. Cl.: F16H 61/12, F16H 61/02

(54) **VEHICLE GEAR CONTROL METHOD AND SYSTEM, ELECTRONIC DEVICE, AND READABLE STORAGE MEDIUM**

(30) Priority: 31.05.2023 CN 202310628970
(71) Applicant: Deepal Automobile Technology Co., Ltd., Chongqing 401133 (CN)
(72) Inventor: GAO, Bo, Chongqing 401135 (CN); ZHAI, Jun, Chongqing 401135 (CN); KONG, Quan, Chongqing 401135 (CN); CHEN, Dong, Chongqing 401135 (CN); WANG, Tao, Chongqing 401135 (CN)
(74) Representative: 2K Patentanwälte Blasberg Kewitz & Reichel
(86) International application number: PCT/CN2023/120952
(87) International publication number: WO 2024/244230

(57) **Abstract**

The present invention relates to the technical field of vehicle control, and disclosed are a vehicle gear control method and system, an electronic device, and a readable storage medium. The method comprises: dividing a gear sensor into a plurality of sensor groups, and when a sensor group experiences a fault, obtaining normal gear signals a plurality of times by means of normally-operating sensor groups, and comparing alternate vehicle gears corresponding to the normal gear signals, using the comparison result to determine a first switching gear, and thus control the vehicle gear of a vehicle terminal. The invention introduces a redundancy mechanism to vehicle gears, improves control accuracy when only a portion of the sensor groups are operating, avoids in two ways the risk that a Hall sensor fault or associated component failure make it impossible to switch the vehicle gear by means of a self-resetting gear shifting rod, and is safe and efficient.

## Description

### TECHNICAL FIELD

The present invention relates to the field of vehicle control technologies, and in particular, to a vehicle gear control method and system, an electronic device, and a readable storage medium.

### BACKGROUND

With continuous development of vehicle technologies, personalization and operability of a vehicle also become an important part of a vehicle evaluation standard. Because a gear shift lever of a self-resetting column shifter is disposed on a steering wheel instead of a conventional physical gear, small space is occupied, personalization and operability of the vehicle are highlighted, and a usage rate in the vehicle is also increasing.

Currently, a Hall sensor is usually used as a gear sensor in the self-resetting column shifter. Because the Hall sensor outputs different hardwired signals as a magnetic pole changes, different vehicle gears can be identified by collecting hardwired signals output by the Hall sensor. However, if any Hall sensor is faulty or an associated member fails, a risk that a vehicle gear cannot be shifted by using the gear shift lever of the self-resetting column shifter is caused, and there is a potential safety risk of a person or a vehicle. Chinese patent application CN111316181A discloses a method for detecting a driving status switching condition by using a current driving status, and determining, according to whether the driving status switching condition is met, whether to perform driving status switching. According to this method, a normal operation cannot be performed when any one of conditions is not met, and a fault tolerance rate is relatively low. Chinese patent application CN107643682A discloses a technical solution in which a potentiometer switched to a normal working state provides a reference to a controller when any potentiometer is faulty. However, in this solution, an accuracy of an output result of a single potentiometer is relatively low, causing a decrease in safety of vehicle control.

Therefore, to avoid the risk that the vehicle gear cannot be shifted by using the gear shift lever of the self-resetting column shifter due to a fault of the Hall sensor or a failure of the associated member, a safe and efficient vehicle gear control method needs to be provided for the self-resetting column shifter.

### SUMMARY

To gain a basic understanding of some aspects of the disclosed embodiments, the following gives a brief summary. The summary is not a general comment, nor intended to determine key/important constituent elements or describe the protection scope of these embodiments, but to serve as a preface to the detailed description that follows.

In view of the foregoing disadvantages of the conventional technology, the present invention discloses a vehicle gear control method and system, an electronic device, and a readable storage medium, to improve safety of vehicle gear control.

The present invention provides a vehicle gear control method, applied to a vehicle terminal, where the vehicle terminal includes a plurality of sensor groups, the sensor group includes gear sensors, and the method includes: separately performing fault detection on the sensor groups to obtain fault detection results of the sensor groups; if both a normal working state and a fault state exist in the fault detection results, determining a sensor group in a normal working state as a normal working group; obtaining normal gear signals from the normal working group a plurality of times, and separately determining candidate vehicle gears corresponding to the normal gear signals from preset vehicle gears of the vehicle terminal, where the normal gear signal is obtained by collecting, in response to a gear shift operation corresponding to the vehicle terminal, sensor signals output by gear sensors in the normal working group; and determining a first shifted-to gear from the preset vehicle gears based on a comparison result between the candidate vehicle gears, to control the vehicle terminal to shift to the first shifted-to gear.

Optionally, before the separately performing fault detection on the sensor groups in the vehicle terminal to obtain fault detection results of the sensor groups, the method further includes: obtaining a sensor base, where the sensor base includes a plurality of first base regions, and if the gear sensor is located in the first base region, the gear sensor outputs a first voltage signal; respectively disposing each gear sensor in each of the sensor groups in a different first base region, and recording a region position of each gear sensor; separately determining a second base region corresponding to each of the preset vehicle gears from the first base regions based on the region position; and separately determining, based on first base regions and second base regions that are corresponding to different preset vehicle gears, sensor signals output by the gear sensors to obtain gear signal thresholds corresponding to the preset vehicle gears, and determining a single group of signal thresholds corresponding to each of the sensor groups from the gear signal thresholds, where in a same sensor group, a single group of signal thresholds corresponding to each of the preset vehicle gears is different.

Optionally, the method further includes: including, by the preset vehicle gear, one reference vehicle gear and a plurality of target vehicle gears; and if it is detected that the sensor signal output by each of the gear sensors is shifted from a gear signal threshold corresponding to the reference vehicle gear to a gear signal threshold corresponding to any target vehicle gear, determining that the vehicle terminal performs a gear shift operation.

Optionally, the obtaining normal gear signals from the normal working group a plurality of times includes: presetting a quantity of signal obtaining times; and in response to the gear shift operation corresponding to the vehicle terminal, collecting the sensor signals output by the gear sensors in the normal working group to obtain the normal gear signal, and prompting to perform a gear shift operation again until the quantity of signal obtaining times is met.

Optionally, the separately determining a candidate vehicle gear corresponding to each of the normal gear signals from preset vehicle gears of the vehicle terminal includes: performing matching on each single group of signal thresholds corresponding to the normal working group based on the normal gear signals, and determining the candidate vehicle gear corresponding to the normal gear signal from the preset vehicle gears based on a matching result.

Optionally, the candidate vehicle gear corresponding to the normal gear signal is determined by using the following method, including: if there is one normal working group, performing matching on each single group of signal thresholds corresponding to the normal working group based on the normal gear signals, and determining the candidate vehicle gear corresponding to the normal gear signal from the preset vehicle gears based on a matching result; or if there are a plurality of normal working groups, splitting the normal gear signals into working sub-signals corresponding to the normal working groups, separately performing matching on a single group of signal thresholds corresponding to each of the working sub-signals based on the working sub-signals, and separately determining second vehicle gears corresponding to the working sub-signals from the preset vehicle gears based on a matching result; and if any two second vehicle gears are the same, using the second vehicle gear as the candidate vehicle gear corresponding to the normal gear signal; or if there are two different second vehicle gears, using the reference vehicle gear as the candidate vehicle gear corresponding to the normal gear signal.

Optionally, the determining a first vehicle gear based on a comparison result between the candidate vehicle gears includes: if a comparison result between any two candidate vehicle gears is "the same", using the candidate vehicle gear as the first vehicle gear; or if a comparison result between any two candidate vehicle gears is "different", using the reference vehicle gear as the first vehicle gear.

Optionally, after the separately performing fault detection on the sensor groups in the vehicle terminal to obtain fault detection results of the sensor groups, the method further includes: if all the fault detection results indicate a normal working state, obtaining, in response to the gear shift operation corresponding to the vehicle terminal, the sensor signals corresponding to the gear sensors to obtain a complete gear signal; and separately performing matching on the gear signal thresholds corresponding to the preset vehicle gears based on the complete gear signal, and determining a third vehicle gear corresponding to the complete gear signal from the preset vehicle gears based on a matching result, to control the vehicle terminal to shift to the third vehicle gear.

Optionally, the separately performing matching on the gear signal thresholds corresponding to the preset vehicle gears based on the complete gear signal, and determining a third vehicle gear corresponding to the complete gear signal from the preset vehicle gears based on a matching result includes: determining a single group of gear signals corresponding to each of the sensor groups from the complete gear signal; performing matching on gear signal thresholds corresponding to the single group of gear signals based on the single group of gear signals, and separately determining fourth vehicle gears corresponding to each single group of gear signals from the preset vehicle gears based on a matching result; and if any two fourth vehicle gears are the same, determining the fourth vehicle gear as the third vehicle gear corresponding to the complete gear signal; or if there are two different fourth vehicle gears, determining the reference vehicle gear as the third vehicle gear corresponding to the complete gear signal.

Optionally, after the separately performing fault detection on the sensor groups in the vehicle terminal to obtain fault detection results of the sensor groups, the method further includes: if all the fault detection results indicate a fault state, shifting the vehicle terminal to the reference vehicle gear, and prompting a gear anomaly.

Optionally, the separately performing fault detection on the sensor groups in the vehicle terminal to obtain fault detection results of the sensor groups includes: obtaining to-be-detected factors of the sensor groups and status duration corresponding to the to-be-detected factors, where the to-be-detected factors include one or more of a vehicle power status of the vehicle terminal, power supply voltages corresponding to the sensor groups, the sensor signals corresponding to the gear sensors in the sensor groups, and a current vehicle gear corresponding to the sensor groups, and the current vehicle gear is determined by using the sensor signals corresponding to the gear sensors in the sensor groups; performing matching on the to-be-detected factors and/or the status duration based on a preset working condition; and if the to-be-detected factors and/or the status duration meet the preset working condition, determining the fault detection result of the sensor group as a normal working state; or if there is a to-be-detected factor and/or status duration that does not meet the preset working condition, determining the fault detection result of the sensor group as a fault state.

The present invention provides a vehicle gear control system, applied to a vehicle terminal, where the vehicle terminal includes a plurality of sensor groups, the sensor group includes gear sensors, and the system includes: a detection module, configured to separately perform fault detection on the sensor groups to obtain fault detection results of the sensor groups; a determining module, configured to: if both a normal working state and a fault state exist in the fault detection results, determine a sensor group in a normal working state as a normal working group; an obtaining module, configured to: obtain normal gear signals from the normal working group a plurality of times, and separately determine candidate vehicle gears corresponding to the normal gear signals from preset vehicle gears of the vehicle terminal, where the normal gear signal is obtained by collecting, in response to a gear shift operation corresponding to the vehicle terminal, sensor signals output by gear sensors in the normal working group; and a control module, configured to determine a first shifted-to gear from the preset vehicle gears based on a comparison result between the candidate vehicle gears, to control the vehicle terminal to shift to the first shifted-to gear.

The present invention provides an electronic device, including a processor and a memory. The memory is configured to store a computer program, and the processor is configured to execute the computer program stored in the memory to enable the electronic device to perform the foregoing method.

The present invention provides a computer-readable storage medium. The computer-readable storage medium stores a computer program, and the computer program is executed by a processor to implement the foregoing method.

### Beneficial effects of the present invention are as follows:

The gear sensors are divided into the plurality of sensor groups; the normal gear signals are obtained the plurality of times by using the sensor group in a normal working state when a sensor group is faulty; the candidate vehicle gears corresponding to the normal gear signals are compared; and the first shifted-to gear is determined based on the comparison result, thereby implementing vehicle gear control on the vehicle terminal. In this way, in comparison with performing vehicle gear control by using all gear shift sensors, the gear sensors are divided into the plurality of sensor groups. The normal gear signals are obtained by using the sensor group in a normal working state when there is a fault sensor group, and the candidate vehicle gears corresponding to the normal gear signals are further verified by obtaining the normal gear signals a plurality of times. A redundancy mechanism is introduced for vehicle gears, and control accuracy is improved when only a part of the sensor groups works, avoiding a risk, from two aspects, that the vehicle gear cannot be shifted by using a gear shift lever of a self-resetting column shifter due to a fault of a Hall sensor or a failure of an associated member, which is safe and efficient.

### BRIEF DESCRIPTION OF DRAWINGS

FIG. 1 is a schematic flowchart of a vehicle gear control method according to an embodiment of the present invention;
FIG. 2 is a system block diagram for implementing a vehicle gear control method according to an embodiment of the present invention;
FIG. 3 is another system block diagram for implementing a vehicle gear control method according to an embodiment of the present invention;
FIG. 4 is a schematic position diagram of a gear sensor arrangement method according to an embodiment of the present invention;
FIG. 5 is a schematic flowchart of a sensor group fault detection method according to an embodiment of the present invention;
FIG. 6 is a schematic flowchart of another vehicle gear control method according to an embodiment of the present invention;
FIG. 7 is a schematic diagram of a structure of a vehicle gear control system according to an embodiment of the present invention; and
FIG. 8 is a schematic diagram of an electronic device according to an embodiment of the present invention.

### DESCRIPTION OF EMBODIMENTS

The following describes implementations of the present invention by using some specific examples. A person skilled in the art can easily understand other advantages and effects of the present invention based on the content disclosed in this specification. The present invention may be further implemented or applied by using other different specific implementations. Various details in this specification may also be modified or altered based on different viewpoints and applications without departing from the essence of the present invention. It should be noted that the following embodiments and sub-samples in the embodiments may be mutually combined when there are no conflicts.

It should be noted that the figures provided in the following embodiments merely schematically describe the basic concept of the present invention. Therefore, the figures display only components related to the present invention instead of being drawn based on a quantity, shapes, and sizes of components in actual implementation. Forms, the quantity, and a ratio of the components in actual implementation of the figures may be randomly changed, and a component layout form of the figures may also be more complex.

In the following descriptions, a large quantity of details are discussed to provide a more thorough explanation of the embodiments of the present invention. However, it is clear to a person skilled in the art that the embodiments of the present invention may be implemented without these specific details. In other embodiments, well-known structures and devices are shown in a block diagram rather than in a detail form, to avoid making the embodiments of the present invention difficult to understand.

The terms "first", "second", and the like in the specification, claims, and the accompanying drawings of the embodiments of the present disclosure are intended to distinguish between similar objects, but are not necessarily used to describe a particular order or sequence. It should be understood that data used in such a way is interchangeable in proper situations, so that the embodiments of the present disclosure described herein can be implemented. In addition, the terms "include" and "have" and any variations thereof are intended to cover non-exclusive inclusion.

Unless otherwise stated, the term "a plurality of" represents two or more.

In the embodiments of the present disclosure, the character "/" indicates that involved objects are in an "or" relationship. For example, A/B indicates A or B.

The term "and/or" is an association relationship that describes objects, and indicates that three relationships may exist. For example, A and/or B represent three relationships: A, or B, or A and B.

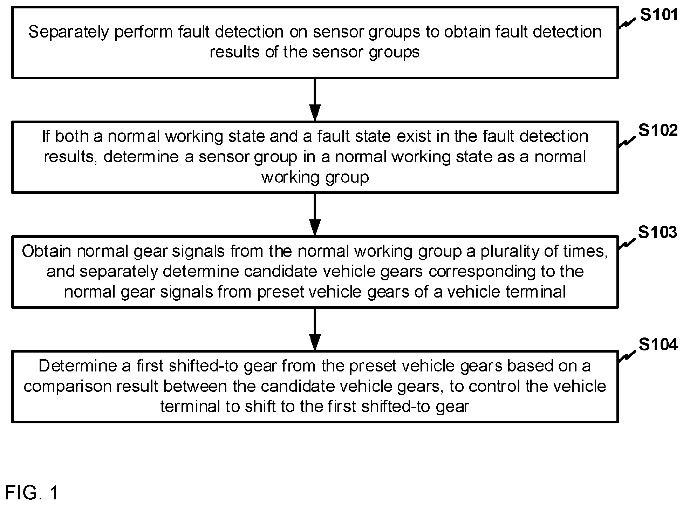

With reference to FIG. 1, an embodiment of the present disclosure provides a vehicle gear control method, applied to a vehicle terminal. The vehicle terminal includes a plurality of sensor groups, the sensor group includes gear sensors, and the method includes the following steps:

Step S101: Separately perform fault detection on the sensor groups to obtain fault detection results of the sensor groups.

Step S102: If both a normal working state and a fault state exist in the fault detection results, determine a sensor group in a normal working state as a normal working group.

Step S103: Obtain normal gear signals from the normal working group a plurality of times, and separately determine candidate vehicle gears corresponding to the normal gear signals from preset vehicle gears of the vehicle terminal.

The normal gear signal is obtained by collecting, in response to a gear shift operation corresponding to the vehicle terminal, sensor signals output by gear sensors in the normal working group.

Step S104: Determine a first shifted-to gear from the preset vehicle gears based on a comparison result between the candidate vehicle gears, to control the vehicle terminal to shift to the first shifted-to gear.

By using the vehicle gear control method provided in this embodiment of the present disclosure, the gear sensors are divided into the plurality of sensor groups; the normal gear signals are obtained the plurality of times by using the sensor group in a normal working state when a sensor group is faulty; the candidate vehicle gears corresponding to the normal gear signals are compared; and the first shifted-to gear is determined based on the comparison result, thereby implementing vehicle gear control on the vehicle terminal. In this way, in comparison with performing vehicle gear control by using all gear shift sensors, the gear sensors are divided into the plurality of sensor groups. The normal gear signals are obtained by using the sensor group in a normal working state when there is a fault sensor group, and the candidate vehicle gears corresponding to the normal gear signals are further verified by obtaining the normal gear signals a plurality of times. A redundancy mechanism is introduced for vehicle gears, and control accuracy is improved when only a part of the sensor groups works, avoiding a risk, from two aspects, that the vehicle gear cannot be shifted by using a gear shift lever of a self-resetting column shifter due to a fault of a Hall sensor or a failure of an associated member, which is safe and efficient.

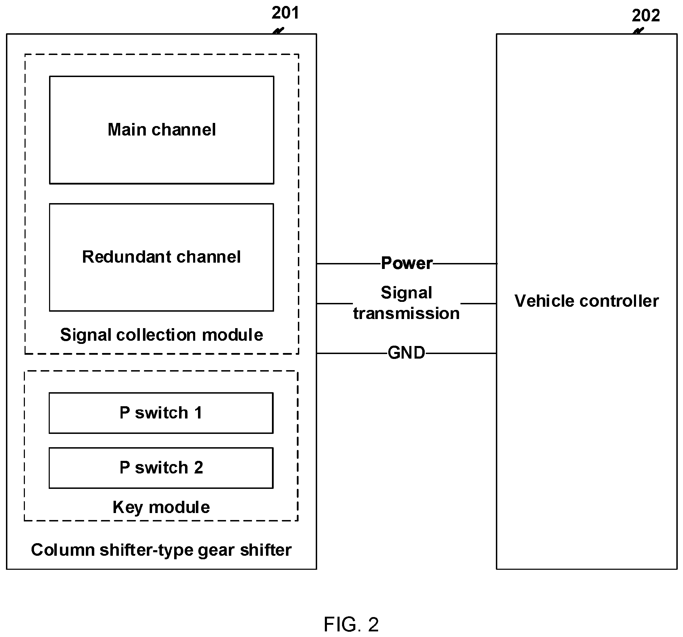

With reference to FIG. 2, an embodiment of the present disclosure provides a system block diagram for implementing the foregoing vehicle gear control method, which includes a column shifter-type gear shifter 201 and a vehicle controller 202. The column shifter-type gear shifter is connected to the vehicle controller by using a power cable, a ground cable (GND), and signal transmission cables of a plurality of gear sensors. The column shifter-type gear shifter includes an information collection module and a key module. The information collection module is configured to output sensor signals of the gear sensors to the vehicle controller by using signal transmission cables of a main channel and a redundant channel. The key module is configured to communicate with the vehicle controller by using a key of the column shifter-type gear shifter. The vehicle controller is configured to control a vehicle gear of a vehicle terminal based on the sensor signals of the gear sensors.

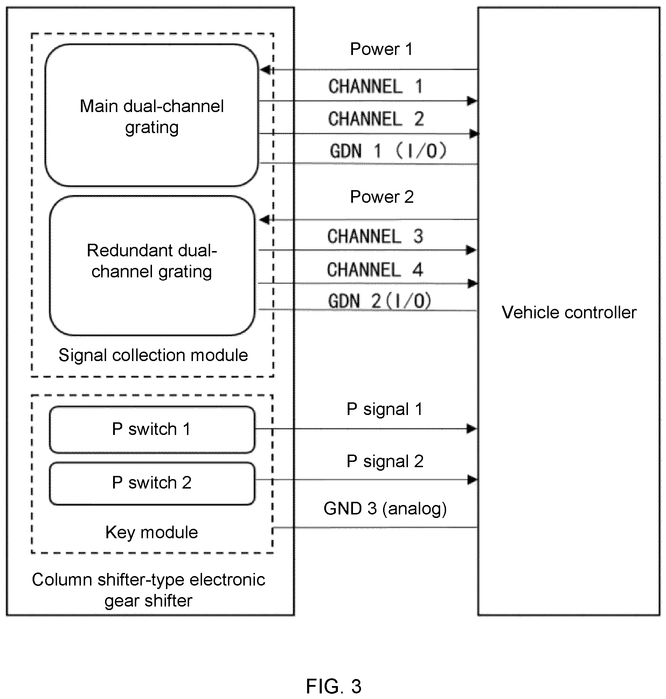

In some embodiments, a connection relationship between the column shifter-type gear shifter and the vehicle controller is shown in FIG. 3. The column shifter-type gear shifter includes the information collection module and the key module. The information collection module includes the main channel and the redundant channel. The main channel is a main dual-channel grating, and the redundant channel is a redundant dual-channel grating. The main dual-channel grating is connected to the vehicle controller by using a power 1, a CHANNEL 1, a CHANNEL 2, and a GDN 1. The redundant dual-channel grating is connected to the vehicle controller by using a power 2, a CHANNEL 3, a CHANNEL 4, and a GDN 2. The key module includes a P switch 1 and a P switch 2. The P switch 1 is connected to the vehicle controller by using a P signal cable 1. The P switch 2 is connected to the vehicle controller by using a P signal cable 2. The key module is connected to the vehicle controller by using a GND 3.

Optionally, before the separately performing fault detection on the sensor groups in the vehicle terminal to obtain fault detection results of the sensor groups, the method further includes: obtaining a sensor base, where the sensor base includes a plurality of first base regions, and if the gear sensor is located in the first base region, the gear sensor outputs a first voltage signal; respectively disposing each gear sensor in each of the sensor groups in a different first base region, and recording a region position of each gear sensor; separately determining a second base region corresponding to each of the preset vehicle gears from the first base regions based on the region position; and separately determining, based on first base regions and second base regions that are corresponding to different preset vehicle gears, sensor signals output by the gear sensors to obtain gear signal thresholds corresponding to the preset vehicle gears, and determining a single group of signal thresholds corresponding to each of the sensor groups from the gear signal thresholds, where in a same sensor group, a single group of signal thresholds corresponding to each of the preset vehicle gears is different.

In some embodiments, the gear sensor is a Hall sensor. In this case, the first base region is an N-pole magnetic region, and the second base region is an S-pole magnetic region. If the Hall sensor is located in the N-pole magnetic region, the Hall sensor is turned on and outputs the first voltage signal, and a voltage value of the first voltage signal is within 0-1.5 V, for example, the voltage value of the first voltage signal is 0.6-1 V. If the Hall sensor is located in the S-pole magnetic region, the Hall sensor is turned off and outputs a second voltage signal, and a voltage value of the second voltage signal is within 3-5 V, for example, the voltage value of the second voltage signal is 4-4.4 V.

Optionally, the method further includes: The preset vehicle gears include one reference (Center) vehicle gear and a plurality of target vehicle gears.

In some embodiments, the target vehicle gear includes an Up (Up) shift, an UpUp (UpUp) shift, a Down (Down) shift, and a DownDown (DownDown) shift.

Optionally, the method further includes: if it is detected that the sensor signal output by each of the gear sensors is shifted from a gear signal threshold corresponding to the reference vehicle gear to a gear signal threshold corresponding to any target vehicle gear, determining that the vehicle terminal performs a gear shift operation.

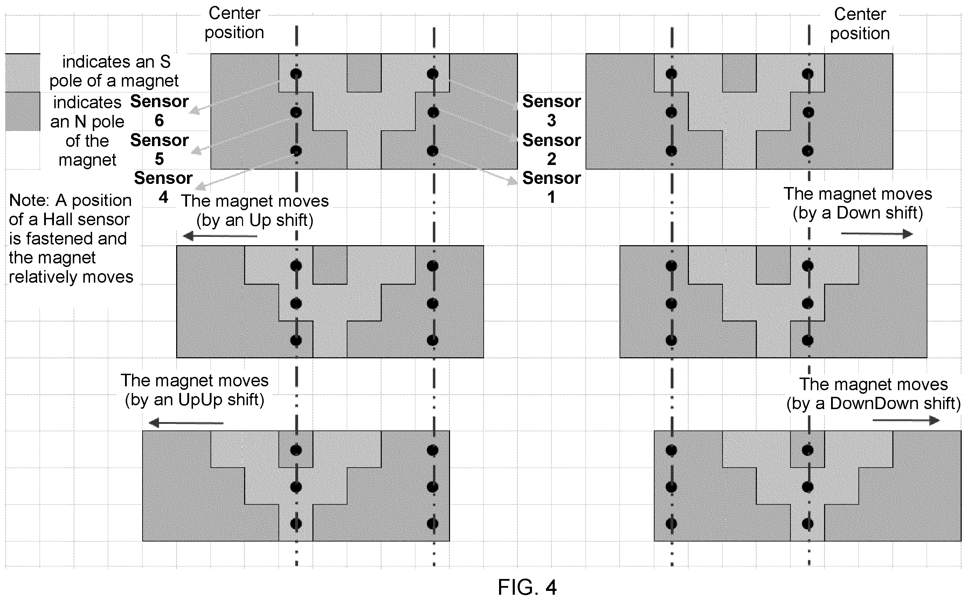

With reference to FIG. 4, an embodiment of the present disclosure provides a gear sensor arrangement method, including: Gear sensors includes a sensor 1, a sensor 2, a sensor 3, a sensor 4, a sensor 5, and a sensor 6, the sensor 2, the sensor 3, and the sensor 4 are used as a first sensor group, and the sensor 1, the sensor 5, and the sensor 6 are used as a second sensor group. The Hall sensor is fastened to the base, a handle of a column shifter-type gear shifter is connected to a magnet, and the Hall sensor is turned on or off based on a position change caused by operating the column shifter-type gear shifter. If the column shifter-type gear shifter is at a center position, the sensor 1, the sensor 2, the sensor 4, and the sensor 5 are located in the N-pole magnetic region (the first base region), and the sensor 3 and the sensor 6 are located in the S-pole magnetic region (the second base region). If the column shifter-type gear shifter is in an Up shift, the S-pole magnetic region is moved to the left of the region by one space, so that the sensor 1, the sensor 2, the sensor 3, and the sensor 4 are located in the N-pole magnetic region, and the sensor 5 and the sensor 6 are located in the S-pole magnetic region. If the column shifter-type gear shifter is in an UpUp shift, the S-pole magnetic region is moved to the left of the region by two spaces, so that the sensor 1, the sensor 2, the sensor 3, and the sensor 6 are located in the N-pole magnetic region, and the sensor 4 and the sensor 5 are located in the S-pole magnetic region. If the column shifter-type gear shifter is in a Down shift, the S-pole magnetic region is moved to the right of the region by one space, so that the sensor 1, the sensor 4, the sensor 5, and the sensor 6 are located in the N-pole magnetic region, and the sensor 2 and the sensor 3 are located in the S-pole magnetic region. If the column shifter-type gear shifter is in a DownDown shift, the S-pole magnetic region is moved to the right of the region by two spaces, so that the sensor 3, the sensor 4, the sensor 5, and the sensor 6 are located in the N-pole magnetic region, and the sensor 1 and the sensor 2 are located in the S-pole magnetic region. The sensor signals output by the gear sensors are separately determined based on the first base regions and the second base regions that are corresponding to the different preset vehicle gears, to obtain the gear signal thresholds corresponding to the preset vehicle gears. The gear signal thresholds corresponding to the preset vehicle gears are shown in Table 1, the first voltage signal is represented by "0", and the second voltage signal is represented by "1".

**Table 1**

| Vehicle gear | Sensor 1 | Sensor 2 | Sensor 3 | Sensor 4 | Sensor 5 | Sensor 6 |
|---|---|---|---|---|---|---|
| UpUp shift | 0 | 0 | 0 | 1 | 1 | 0 |
| Up shift | 0 | 0 | 0 | 0 | 1 | 1 |
| Center position | 0 | 0 | 1 | 0 | 0 | 1 |
| Down shift | 0 | 1 | 1 | 0 | 0 | 0 |
| DownDown shift | 1 | 1 | 0 | 0 | 0 | 0 |

By using the gear sensor arrangement method provided in this embodiment of the present disclosure, the gear sensors are divided into the plurality of sensor groups; the normal gear signals are obtained the plurality of times by using the sensor group in a normal working state when a sensor group is faulty; the candidate vehicle gears corresponding to the normal gear signals are compared; and the first shifted-to gear is determined based on the comparison result, thereby implementing vehicle gear control on the vehicle terminal. In this way, in comparison with performing vehicle gear control by using all gear shift sensors, the gear sensors are divided into the plurality of sensor groups. The normal gear signals are obtained by using the sensor group in a normal working state when there is a fault sensor group, and the candidate vehicle gears corresponding to the normal gear signals are further verified by obtaining the normal gear signals a plurality of times. A redundancy mechanism is introduced for vehicle gears, and control accuracy is improved when only a part of the sensor groups works, avoiding a risk, from two aspects, that the vehicle gear cannot be shifted by using a gear shift lever of a self-resetting column shifter due to a fault of the Hall sensor or a failure of an associated member, which is safe and efficient.

Optionally, the separately performing fault detection on the sensor groups in the vehicle terminal to obtain fault detection results of the sensor groups includes: obtaining to-be-detected factors of the sensor groups and status duration corresponding to the to-be-detected factors, where the to-be-detected factors include one or more of a vehicle power status of the vehicle terminal, power supply voltages corresponding to the sensor groups, the sensor signals corresponding to the gear sensors in the sensor groups, and a current vehicle gear corresponding to the sensor groups, and the current vehicle gear is determined by using the sensor signals corresponding to the gear sensors in the sensor groups; performing matching on the to-be-detected factors and/or the status duration based on a preset working condition; and if the to-be-detected factors and/or the status duration meet the preset working condition, determining the fault detection result of the sensor group as a normal working state; or if there is a to-be-detected factor and/or status duration that does not meet the preset working condition, determining the fault detection result of the sensor group as a fault state.

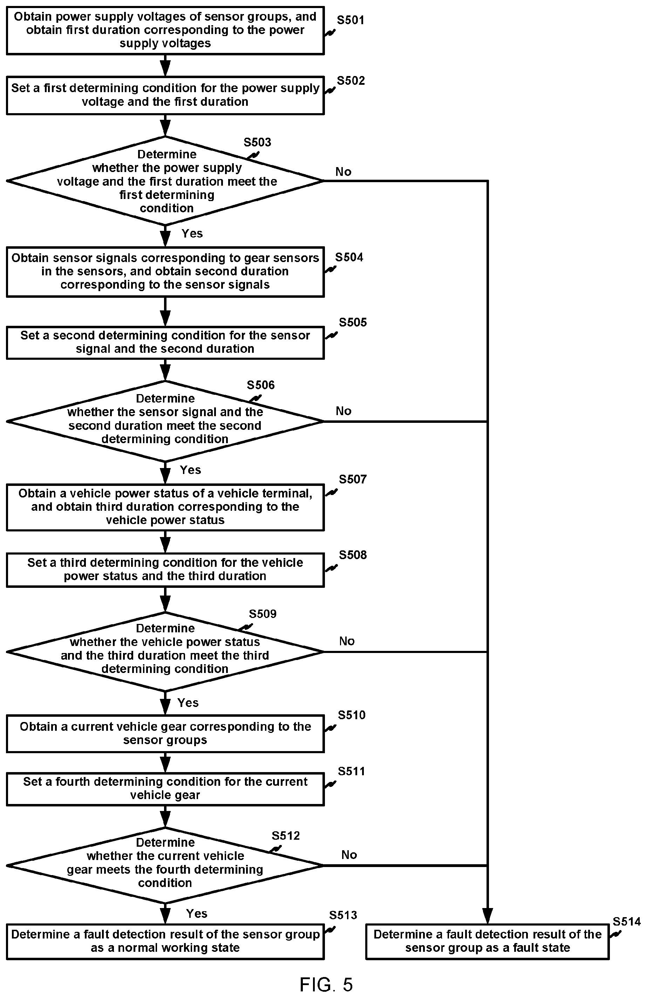

With reference to FIG. 5, an embodiment of the present disclosure provides a sensor group fault detection method, including the following steps:
Step S501: Obtain the power supply voltages of the sensor groups, and obtain first duration corresponding to the power supply voltages.
Step S502: Set a first determining condition for the power supply voltage and the first duration.

The first determining condition includes that the power supply voltage is located in a preset power supply interval, and the first duration is greater than or equal to preset first duration.

The preset power supply interval includes 4.8-5.2 V, and the preset first duration includes 50 ms.

Step S503: Determine whether the power supply voltage and the first duration meet the first determining condition; and if yes, jump to step S504, or if no, jump to step S514.

Step S504: Obtain the sensor signals corresponding to the gear sensors in the sensors, and obtain second duration corresponding to the sensor signals.

Step S505: Set a second determining condition for the sensor signal and the second duration.

The second determining condition includes that the sensor signal is located in a preset signal voltage interval, and the second duration is greater than or equal to preset second duration.

The signal voltage interval includes 0.6-1 V and 4-4.4 V, and the preset second duration includes 80 ms.

Step S506: Determine whether the sensor signal and the second duration meet the second determining condition; and if yes, jump to step S507, or if no, jump to step S514.

Step S507: Obtain the vehicle power status of the vehicle terminal, and obtain third duration corresponding to the vehicle power status.

Step S508: Set a third determining condition for the vehicle power status and the third duration.

The third determining condition includes that the vehicle power status is in an ON state, and the third duration is greater than or equal to preset third duration.

The preset third duration includes 10s.

Step S509: Determine whether the vehicle power status and the third duration meet the third determining condition; and if yes, jump to step S510, or if no, jump to step S514.

Step S510: Obtain the current vehicle gear corresponding to the sensor groups.

The current vehicle gear is determined by using the sensor signals corresponding to the gear sensors in the sensor groups.

Step S511: Set a fourth determining condition for the current vehicle gear.

The fourth determining condition includes that the current vehicle gear is at a center position.

Step S512: Determine whether the current vehicle gear meets the fourth determining condition; and if yes, jump to step S513, or if no, jump to step S514.

Step S513: Determine the fault detection result of the sensor group as a normal working state.

Step S514: Determine the fault detection result of the sensor group as a fault state.

Optionally, the obtaining normal gear signals from the normal working group a plurality of times includes: presetting a quantity of signal obtaining times; in response to the gear shift operation corresponding to the vehicle terminal, collecting the sensor signals output by the gear sensors in the normal working group to obtain the normal gear signal, and prompting to perform a gear shift operation again until the quantity of signal obtaining times is met.

Optionally, the separately determining candidate vehicle gears corresponding to the normal gear signals from preset vehicle gears of the vehicle terminal includes: performing matching on each single group of signal thresholds corresponding to the normal working group based on the normal gear signals, and determining the candidate vehicle gear corresponding to the normal gear signal from the preset vehicle gears based on a matching result.

Optionally, the candidate vehicle gear corresponding to the normal gear signal is determined by using the following method, including: if there is one normal working group, performing matching on each single group of signal thresholds corresponding to the normal working group based on the normal gear signals, and determining the candidate vehicle gear corresponding to the normal gear signal from the preset vehicle gears based on a matching result; or if there are a plurality of normal working groups, splitting the normal gear signals into working sub-signals corresponding to the normal working groups, separately performing matching on a single group of signal thresholds corresponding to each of the working sub-signals based on the working sub-signals, and separately determining second vehicle gears corresponding to the working sub-signals from the preset vehicle gears based on a matching result; and if any two second vehicle gears are the same, using the second vehicle gear as the candidate vehicle gear corresponding to the normal gear signal; or if there are two different second vehicle gears, using the reference vehicle gear as the candidate vehicle gear corresponding to the normal gear signal.

Optionally, the determining a first vehicle gear based on a comparison result between the candidate vehicle gears includes: if a comparison result between any two candidate vehicle gears is "the same", using the candidate vehicle gear as the first vehicle gear; or if a comparison result between any two candidate vehicle gears is "different", using the reference vehicle gear as the first vehicle gear.

In some embodiments, if the first group (the sensor 2, the sensor 3, and the sensor 4) is in a fault state, the second group including the sensor 1, the sensor 5, and the sensor 6 is used as a normal working group. In response to the gear shift operation corresponding to the vehicle terminal, the sensor signals output by the gear sensors in the normal working group are collected to obtain the normal gear signal. If the normal gear signal points to an Up shift and duration is greater than preset gear shift duration, a position of a to-be-determined gear is recorded as the Up shift, and a user is reminded that "the column shifter is abnormal, and operate again". If a normal gear signal obtained in response to another shift operation of the user still points to an Up shift and duration is greater than the preset gear shift duration, the Up shift is used as the first vehicle gear; and a gear control signal representing the Up shift is sent, and it is ensured that duration of the gear control signal is greater than or equal to preset control duration, so that the vehicle terminal shifts to the Up shift. After the vehicle terminal shifts to the Up shift, a gear control signal representing the center position is sent. If the normal gear signal points to another target vehicle gear, a similar operation is performed.

In some embodiments, record time of the position of the to-be-determined gear does not exceed preset record duration, reminding the user that "the column shifter is abnormal, and operate again" does not exceed preset reminding duration, and reminding is stopped after a second normal gear signal is collected.

Optionally, after the separately performing fault detection on the sensor groups in the vehicle terminal to obtain fault detection results of the sensor groups, the method further includes: if all the fault detection results indicate a normal working state, obtaining, in response to the gear shift operation corresponding to the vehicle terminal, the sensor signals corresponding to the gear sensors to obtain a complete gear signal; and separately performing matching on the gear signal thresholds corresponding to the preset vehicle gears based on the complete gear signal, and determining a third vehicle gear corresponding to the complete gear signal from the preset vehicle gears based on a matching result, to control the vehicle terminal to shift to the third vehicle gear.

In some embodiments, shifting the vehicle gear of the vehicle terminal includes: obtaining, in response to the gear shift operation corresponding to the vehicle terminal, the sensor signals corresponding to the gear sensors to obtain the complete gear signal; if the complete gear signal meets a gear signal threshold of an Up shift, and duration of the complete gear signal is greater than or equal to the preset gear shift duration, determining that the third vehicle gear corresponding to the complete gear signal is the Up shift; sending a gear control signal representing the Up shift, and ensuring that duration of the gear control signal is greater than or equal to the preset control duration, so that the vehicle terminal shifts to the Up shift; and after the vehicle terminal shifts to the Up shift, sending a gear control signal representing the center position. Shifting the vehicle gear of the vehicle terminal to another target vehicle gear is similar thereto.

In some embodiments, if the complete gear signal meets the gear signal threshold of the Up shift, and the duration of the complete gear signal is greater than or equal to the preset gear shift duration, the column shifter-type gear shifter shifts from the Up shift to an UpUp shift, and still uses the Up shift as the third vehicle gear corresponding to the complete gear signal.

Optionally, the separately performing matching on the gear signal thresholds corresponding to the preset vehicle gears based on the complete gear signal, and determining a third vehicle gear corresponding to the complete gear signal from the preset vehicle gears based on a matching result includes: determining a single group of gear signals corresponding to each of the sensor groups from the complete gear signal; performing matching on gear signal thresholds corresponding to the single group of gear signals based on the single group of gear signals, and separately determining fourth vehicle gears corresponding to each single group of gear signals from the preset vehicle gears based on a matching result; and if any two fourth vehicle gears are the same, determining the fourth vehicle gear as the third vehicle gear corresponding to the complete gear signal; or if there are two different fourth vehicle gears, determining the reference vehicle gear as the third vehicle gear corresponding to the complete gear signal.

In some embodiments, if signals output by different sensor groups point to different gears, the reference vehicle gear is determined as the third vehicle gear corresponding to the complete gear signal.

Optionally, after the separately performing fault detection on the sensor groups in the vehicle terminal to obtain fault detection results of the sensor groups, the method further includes: if all the fault detection results indicate a fault state, shifting the vehicle terminal to the reference vehicle gear, and prompting a gear anomaly.

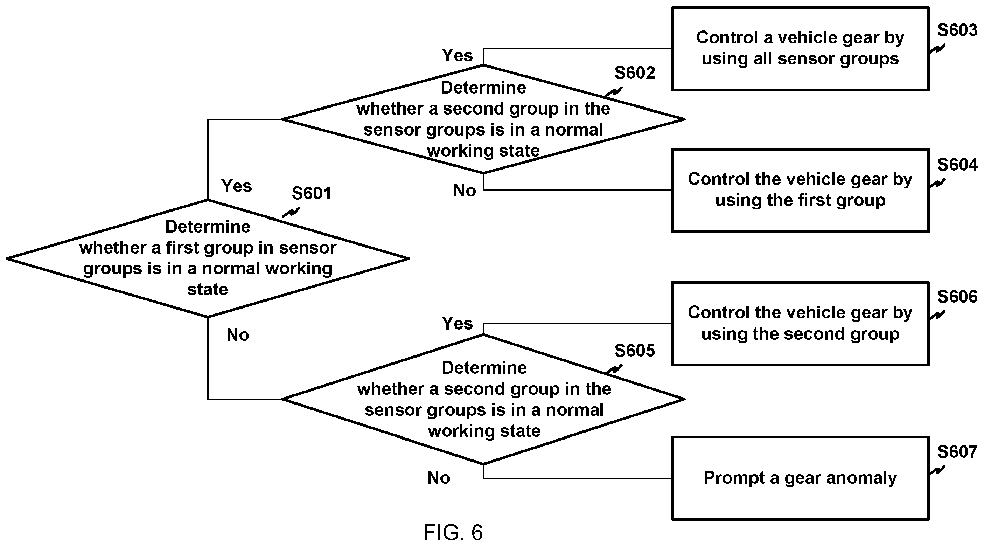

With reference to FIG. 6, an embodiment of the present disclosure provides a vehicle gear control method, including the following steps:
Step S601: Determine whether the first group in the sensor groups is in a normal working state; and if yes, jump to step S602, or if no, jump to step S605.
Step S602: Determine whether the second group in the sensor groups is in a normal working state; and if yes, jump to step S603, or if no, jump to step S604.
Step S603: Control the vehicle gear by using all the sensor groups.
Step S604: Control the vehicle gear by using the first group.
Step S605: Determine whether the second group in the sensor groups is in a normal working state; and if yes, jump to step S606, or if no, jump to step S607.
Step S606: Control the vehicle gear by using the second group.
Step S607: Prompt a gear anomaly.

By using the vehicle gear control method provided in this embodiment of the present disclosure, the gear sensors are divided into the plurality of sensor groups; the normal gear signals are obtained the plurality of times by using the sensor group in a normal working state when a sensor group is faulty; the candidate vehicle gears corresponding to the normal gear signals are compared; and the first shifted-to gear is determined based on the comparison result, thereby implementing vehicle gear control on the vehicle terminal. In this way, in comparison with performing vehicle gear control by using all gear shift sensors, the gear sensors are divided into the plurality of sensor groups. The normal gear signals are obtained by using the sensor group in a normal working state when there is a fault sensor group, and the candidate vehicle gears corresponding to the normal gear signals are further verified by obtaining the normal gear signals a plurality of times. A redundancy mechanism is introduced for vehicle gears, and control accuracy is improved when only a part of the sensor groups works, avoiding a risk, from two aspects, that the vehicle gear cannot be shifted by using a gear shift lever of a self-resetting column shifter due to a fault of a Hall sensor or a failure of an associated member, which is safe and efficient.

In some embodiments, a normal working mode and a redundant working mode are preset. The normal working mode is used to control the vehicle gear by using all the sensor groups, and the redundant working mode is used to control the vehicle gear by using the sensor group in a normal working state. If the sensor groups are in a normal working state, the normal working state is entered. If there is a sensor group in a fault state, the redundant working mode is entered.

**In** some embodiments, if the power status of the vehicle terminal is ON, fault detection is performed on the first group and the second group in the sensor groups. If both the first group and the second group are in a normal working state, the gear shifter of the vehicle terminal is controlled to switch to a normal working mode. If the first group is in a normal working state and the second group is in a fault state, the shifter of the vehicle terminal is controlled to switch to a fault working mode 1. The fault working mode 1 is used to control the vehicle gear by using the first group. If the first group is in a fault state and the second group is in a normal working state, the shifter of the vehicle terminal is controlled to switch to a fault working mode 2. The fault working mode 2 is used to control the vehicle gear by using the second group. If both the first group and the second group are in a fault state, the shifter of the vehicle terminal is controlled to switch to a fault working mode 3. The fault working mode 3 is used when the vehicle controller cannot identify whether a shifter demand is valid, to send text to prompt the user for a preset time period that gear shifting cannot be implemented, which is similar to "the column shifter is faulty, please check", control the vehicle terminal to shift to a Center gear, and input fault information of the column shifter to a vehicle gear shifting module.

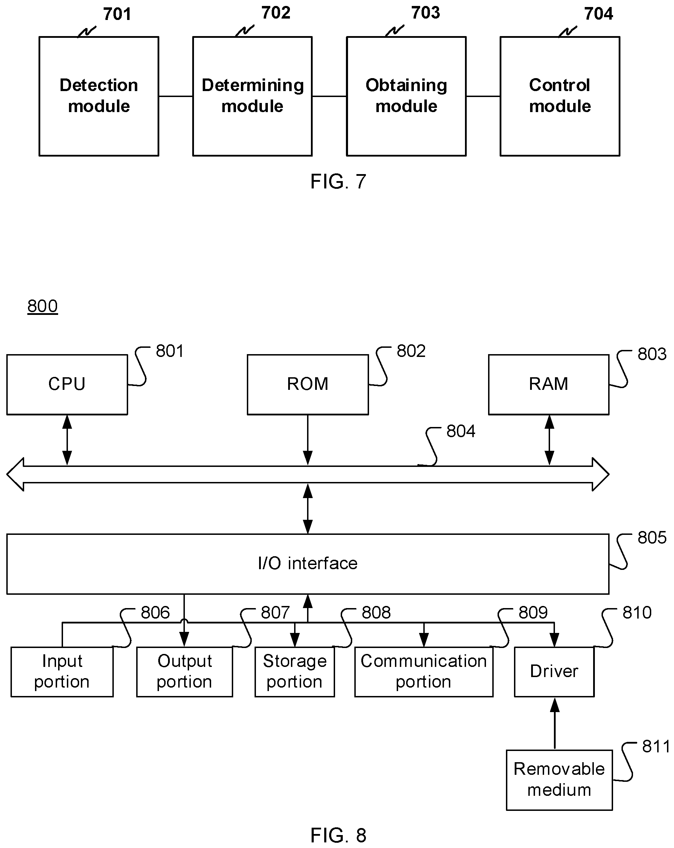

With reference to FIG. 7, an embodiment of the present disclosure provides a vehicle gear control system, applied to a vehicle terminal. The vehicle terminal includes a plurality of sensor groups, the sensor groups include gear sensors, and the system includes a detection module 701, a determining module 702, an obtaining module 703, and a control module 704. The detection module 701 is configured to separately perform fault detection on the sensor groups to obtain fault detection results of the sensor groups. The determining module 702 is configured to: if both a normal working state and a fault state exist in the fault detection results, determine a sensor group in a normal working state as a normal working group. The obtaining module 703 is configured to: obtain normal gear signals from the normal working group a plurality of times, and separately determine candidate vehicle gears corresponding to the normal gear signals from preset vehicle gears of the vehicle terminal, where the normal gear signal is obtained by collecting, in response to a gear shift operation corresponding to the vehicle terminal, sensor signals output by gear sensors in the normal working group. The control module 704 is configured to determine a first shifted-to gear from the preset vehicle gears based on a comparison result between the candidate vehicle gears, to control the vehicle terminal to shift to the first shifted-to gear.

**By** using the vehicle gear control system provided in this embodiment of the present disclosure, the gear sensors are divided into the plurality of sensor groups; the normal gear signals are obtained the plurality of times by using the sensor group in a normal working state when a sensor group is faulty; the candidate vehicle gears corresponding to the normal gear signals are compared; and the first shifted-to gear is determined based on the comparison result, thereby implementing vehicle gear control on the vehicle terminal. In this way, in comparison with performing vehicle gear control by using all gear shift sensors, the gear sensors are divided into the plurality of sensor groups. The normal gear signals are obtained by using the sensor group in a normal working state when there is a fault sensor group, and the candidate vehicle gears corresponding to the normal gear signals are further verified by obtaining the normal gear signals a plurality of times. A redundancy mechanism is introduced for vehicle gears, and control accuracy is improved when only a part of the sensor groups works, avoiding a risk, from two aspects, that the vehicle gear cannot be shifted by using a gear shift lever of a self-resetting column shifter due to a fault of a Hall sensor or a failure of an associated member, which is safe and efficient.

FIG. 8 is a schematic diagram of a structure of a computer system suitable for implementing an electronic device according to an embodiment of this application. It should be noted that the computer system 800 of the electronic device shown in FIG. 8 is merely an example, and should not impose any limitation on a function and a use range of the embodiments of this application.

As shown in FIG. 8, the computer system 800 includes a central processing unit (Central Processing Unit, CPU) 801. The CPU may perform various proper actions and processing based on a program stored in a read-only memory (Read-Only Memory, ROM) 802 or a program loaded from a storage portion 808 to a random access memory (Random Access Memory, RAM) 803, for example, perform the method provided in the foregoing embodiments. The RAM 803 further stores various programs and data required for a system operation. The CPU 801, the ROM 802, and the RAM 803 are connected to each other through a bus 804. An input/output (Input/Output, I/O) interface 805 is also connected to the bus 804.

The following parts are connected to the I/O interface 805: an input portion 806 including a keyboard, a mouse, and the like; an output portion 807 including a cathode ray tube (Cathode Ray Tube, CRT), a liquid crystal display (Liquid Crystal Display, LCD), a speaker, and the like; the storage portion 808 including a hard disk, and the like; and a communication portion 809 including a network interface card such as a LAN (Local Area Network, local area network) card or a modem. The communication portion 809 performs communication processing via a network such as the Internet. A driver 810 is also connected to the I/O interface 805 according to a requirement. A removable medium 811 such as a magnetic disk, an optical disc, a magneto-optical disc, or a semiconductor memory is mounted on the driver 810 according to a requirement, so that a computer program read from the removable medium 811 is installed into the storage portion 808 according to a requirement.

In particular, according to the embodiments of this application, a process described above with reference to the flowchart may be implemented as a computer software program. For example, embodiments of this application include a computer program product, where the computer program product includes a computer program carried on a computer-readable medium, and the computer program includes a computer program used to perform the method shown in the flowchart. In such an embodiment, the computer program may be downloaded and installed from a network through the communication portion 809, and/or installed from the removable medium 811. When the computer program is executed by the central processing unit (CPU) 801, various functions defined in the system of this application are executed.

It should be noted that the computer-readable medium described in the embodiments of this application may be a computer-readable signal medium, a computer-readable storage medium, or any combination thereof. The computer-readable storage medium may be, for example, an electrical system, apparatus, or device, a magnetic system, apparatus, or device, an optical system, apparatus, or device, an electromagnetic system, apparatus, or device, an infrared system, apparatus, or device, or a semiconductor system, apparatus, or device, or any combination thereof. A more specific example of the computer-readable storage medium may include but is not limited to an electrical connection having one or more wires, a portable computer disk, a hard disk, a random access memory (RAM), a read-only memory (ROM), an erasable programmable read-only memory (Erasable Programmable Read Only Memory, EPROM), a flash memory, an optical fiber, a portable compact disk read-only memory (Compact Disc Read-Only Memory, CD-ROM), an optical storage device, a magnetic storage device, or any proper combination thereof. In this application, the computer-readable signal medium may include a data signal propagated in a baseband or as a part of a carrier, and carries a computer-readable computer program. The propagated data signal may be in a plurality of forms, including but not limited to an electromagnetic signal, an optical signal, or any suitable combination thereof. The computer-readable signal medium may alternatively be any computer-readable medium other than a computer-readable storage medium, and the computer-readable medium may send, propagate, or transmit a program used by or in combination with an instruction execution system, apparatus, or device. The computer program included in the computer-readable medium may be transmitted by using any proper medium, including but not limited to a wireless medium or a wired medium, or any proper combination thereof.

An embodiment of the present disclosure further discloses a computer-readable storage medium. The computer-readable storage medium stores a computer program, and the program is executed by a processor to implement any method in the embodiments.

For the computer-readable storage medium in this embodiment of the present disclosure, a person of ordinary skill in the art may understand that all or some of the steps in the method embodiments may be implemented by hardware associated with the computer program. The foregoing computer program may be stored in a computer-readable storage medium. When the program is executed, the steps in the method embodiments are performed. The foregoing storage medium includes any medium that can store program code, for example, a ROM, a RAM, a magnetic disk, or an optical disc.

An electronic device disclosed in an embodiment includes a processor, a memory, a transceiver, and a communication interface. The memory and the communication interface are connected to the processor and the transceiver and complete mutual communication. The memory is configured to store a computer program, the communication interface is configured to perform communication, and the processor and the transceiver are configured to run the computer program to enable the electronic device to perform the steps in the foregoing method.

In this embodiment, the memory may include a random access memory (Random Access Memory, RAM for short), and may further include a non-volatile memory (non-volatile memory), for example, at least one magnetic disk memory.

The processor may be a general-purpose processor, including a central processing unit (Central Processing Unit, CPU for short), a graphics processing unit (Graphics Processing Unit, GPU for short), a network processor (Network Processor, NP for short), and the like, or may be a digital signal processor (Digital Signal Processing, DSP for short), an application specific integrated circuit (Application Specific Integrated Circuit, ASIC for short), a field-programmable gate array (Field-Programmable Gate Array, FPGA for short) or another programmable logic device, a discrete gate or a transistor logic device, or a discrete hardware component.

The foregoing description and accompanying drawings fully illustrate the embodiments of the present disclosure, so that a person skilled in the art can practice them. Other embodiments may include structural, logical, electrical, procedural, and other changes. The embodiments represent only possible variations. Unless otherwise explicitly required, individual components and functions are optional and a sequence of operations may vary. Portions and sub-samples of some embodiments may be included in or substituted for portions and sub-samples of other embodiments. In addition, words used in this application are used only to describe the embodiments and are not used to limit the claims. As used in the description of the embodiments and the claims, unless otherwise explicitly indicated in the context, singular forms "a", "an", and "the" are intended to include plural forms as well. Similarly, the term "and/or" as used in this application refers to any and all possible combinations including one or more associated lists. In addition, when used in this application, the term "include" (comprise) and its variant "includes" (comprises) and/or including (comprising) or the like indicates presence of a stated sub-sample, entirety, step, operation, element, and/or component, but does not rule out presence or addition of one or more other sub-samples, entireties, steps, operations, elements, components, and/or groups thereof. Without further limitation, the element defined by the sentence "including a" does not exclude that other identical elements also exist in the process, method, or device including the element. In this specification, each embodiment may focus on a difference from other embodiments. For same and similar parts between the embodiments, refer to each other. For the method, product, and the like disclosed in the embodiments, if the method, product, and the like correspond to the method part disclosed in the embodiments, refer to descriptions of the method part for a relevant part.

A person skilled in the art may be aware that the units and the algorithm steps in the examples described with reference to the embodiments disclosed in this specification can be implemented by using electronic hardware or a combination of computer software and electronic hardware. Whether these functions are performed by hardware or software may depend on specific applications and design constraints of the technical solutions. A person skilled in the art may use different methods to implement the described functions for each particular application, but it should not be considered that the implementation goes beyond the scope of the embodiments of the present disclosure. It may be clearly understood by a person skilled in the art that for convenience and brevity of description, for specific working processes of the described system, apparatus, and unit, references may be made to the corresponding processes in the foregoing method embodiments. Details are not described herein again.

In the embodiments disclosed in this specification, the disclosed methods and products (including but not limited to apparatuses, devices, and the like) may be implemented in other manners. For example, the apparatus embodiments described above are merely examples. For example, the unit division may be merely logical function division, and there may be another division manner in actual implementation. For example, a plurality of units or components may be combined or integrated into another system, or some sub-samples may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms. The units described as separate components may or may not be physically separated, and components displayed as units may or may not be physical units, in other words, may be located in one place, or may be distributed on a plurality of network units. Some or all of the units may be selected based on actual requirements to achieve the embodiments. In addition, functional units in the embodiments of the present disclosure may be integrated into one processing unit, or each of the units may exist alone physically, or two or more units are integrated into one unit.

The flowcharts and the block diagrams in the accompanying drawings display system architectures, functions, and operations that may be implemented by systems, methods, and computer program products according to embodiments of the present disclosure. In this regard, each block in the flowcharts or block diagrams may represent a module, a program segment, or a part of code, and the module, the program segment, or the part of code includes one or more executable instructions for implementing a specified logical function. In some alternative implementations, functions marked in the blocks may alternatively implemented in a sequence different from that marked in the accompanying drawings. For example, two consecutive blocks can actually be executed substantially in parallel, or sometimes may be executed in a reverse order, which may depend on the functions involved. In descriptions corresponding to the flowcharts and the block diagrams in the accompanying drawings, operations or steps corresponding to different blocks may alternatively occur in a sequence different from that disclosed in the descriptions, and sometimes, there is no specific sequence between different operations or steps. For example, two consecutive operations or steps can actually be executed substantially in parallel, or sometimes may be executed in a reverse order, which may depend on the functions involved. Each block in the block diagrams and/or the flowcharts, and a combination of blocks in the block diagrams and/or the flowcharts may be implemented by a dedicated hardware-based system that performs specified functions or actions, or may be implemented by a combination of dedicated hardware and computer instructions.

## Claims

1. A vehicle gear control method, applied to a vehicle terminal, wherein the vehicle terminal comprises a plurality of sensor groups, the sensor group comprises gear sensors, and the method comprises:
separately performing fault detection on the sensor groups to obtain fault detection results of the sensor groups;
if both a normal working state and a fault state exist in the fault detection results, determining a sensor group in the normal working state as a normal working group;
obtaining normal gear signals from the normal working group a plurality of times, and separately determining candidate vehicle gears corresponding to the normal gear signals from preset vehicle gears of the vehicle terminal, wherein the normal gear signal is obtained by collecting, in response to a gear shift operation corresponding to the vehicle terminal, sensor signals output by gear sensors in the normal working group; and
determining a first shifted-to gear from the preset vehicle gears based on a comparison result between the candidate vehicle gears, to control the vehicle terminal to shift to the first shifted-to gear.

2. The method according to claim 1, wherein before separately performing fault detection on the sensor groups in the vehicle terminal to obtain fault detection results of the sensor groups, the method further comprises:
obtaining a sensor base, wherein the sensor base comprises a plurality of first base regions, and if the gear sensor is located in the first base region, the gear sensor outputs a first voltage signal;
respectively disposing each gear sensor in each of the sensor groups in a different first base region, and recording a region position of each gear sensor;
separately determining a second base region corresponding to each of the preset vehicle gears from the first base regions based on the region position; and
separately determining, based on first base regions and second base regions that are corresponding to different preset vehicle gears, sensor signals output by the gear sensors to obtain gear signal thresholds corresponding to the preset vehicle gears, and determining a single group of signal thresholds corresponding to each of the sensor groups from the gear signal thresholds, wherein in a same sensor group, a single group of signal thresholds corresponding to each of the preset vehicle gears is different.

3. The method according to claim 2, wherein the method further comprises:
the preset vehicle gear comprising one reference vehicle gear and a plurality of target vehicle gears; and
if it is detected that the sensor signal output by each of the gear sensors is shifted from a gear signal threshold corresponding to the reference vehicle gear to a gear signal threshold corresponding to any target vehicle gear, determining that the vehicle terminal performs a gear shift operation.

4. The method according to claim 3, wherein obtaining normal gear signals from the normal working group the plurality of times comprises:
presetting a quantity of signal obtaining times; and
in response to the gear shift operation corresponding to the vehicle terminal, collecting the sensor signals output by the gear sensors in the normal working group to obtain the normal gear signal, and prompting to perform a gear shift operation again until the quantity of signal obtaining times is met.

5. The method according to claim 4, wherein separately determining the candidate vehicle gear corresponding to each of the normal gear signals from preset vehicle gears of the vehicle terminal comprises:
performing matching on each single group of signal thresholds corresponding to the normal working group based on the normal gear signals, and determining the candidate vehicle gear corresponding to the normal gear signal from the preset vehicle gears based on a matching result.

6. The method according to claim 4, wherein determining the candidate vehicle gear corresponding to the normal gear signal comprising:
if there is one normal working group, performing matching on each single group of signal thresholds corresponding to the normal working group based on the normal gear signals, and determining the candidate vehicle gear corresponding to the normal gear signal from the preset vehicle gears based on a matching result; or
if there are a plurality of normal working groups, splitting the normal gear signals into working sub-signals corresponding to the plurality of normal working groups, separately performing matching on a single group of signal thresholds corresponding to each of the working sub-signals based on the working sub-signals, and separately determining second vehicle gears corresponding to the working sub-signals from the preset vehicle gears based on a matching result; and
if any two second vehicle gears are the same, using the second vehicle gear as the candidate vehicle gear corresponding to the normal gear signal; or
if there are two different second vehicle gears, using the reference vehicle gear as the candidate vehicle gear corresponding to the normal gear signal.

7. The method according to claim 5, wherein determining the first vehicle gear based on the comparison result between the candidate vehicle gears comprises:
if a comparison result between any two candidate vehicle gears is "the same", using the candidate vehicle gear as the first vehicle gear; or
if a comparison result between any two candidate vehicle gears is "different", using the reference vehicle gear as the first vehicle gear.

8. The method according to claim 3, wherein after separately performing fault detection on the sensor groups in the vehicle terminal to obtain fault detection results of the sensor groups, the method further comprises:
if all the fault detection results indicate a normal working state, obtaining, in response to the gear shift operation corresponding to the vehicle terminal, the sensor signals corresponding to the gear sensors to obtain a complete gear signal; and
separately performing matching on the gear signal thresholds corresponding to the preset vehicle gears based on the complete gear signal, and determining a third vehicle gear corresponding to the complete gear signal from the preset vehicle gears based on a matching result, to control the vehicle terminal to shift to the third vehicle gear.

9. The method according to claim 8, wherein separately performing matching on the gear signal thresholds corresponding to the preset vehicle gears based on the complete gear signal, and determining the third vehicle gear corresponding to the complete gear signal from the preset vehicle gears based on the matching result comprises:
determining a single group of gear signals corresponding to each of the sensor groups from the complete gear signal;
performing matching on gear signal thresholds corresponding to the single group of gear signals based on the single group of gear signals, and separately determining fourth vehicle gears corresponding to each single group of gear signals from the preset vehicle gears based on a matching result; and
if any two fourth vehicle gears are the same, determining the fourth vehicle gear as the third vehicle gear corresponding to the complete gear signal; or
if there are two different fourth vehicle gears, determining the reference vehicle gear as the third vehicle gear corresponding to the complete gear signal.

10. The method according to claim 3, wherein after separately performing fault detection on the sensor groups in the vehicle terminal to obtain fault detection results of the sensor groups, the method further comprises:
if all the fault detection results indicate a fault state, shifting the vehicle terminal to the reference vehicle gear, and prompting a gear anomaly.

11. The method according to any one of claims 1 to 10, wherein separately performing fault detection on the sensor groups in the vehicle terminal to obtain fault detection results of the sensor groups comprises:
obtaining to-be-detected factors of the sensor groups and status duration corresponding to the to-be-detected factors, wherein the to-be-detected factors comprise one or more of a vehicle power status of the vehicle terminal, power supply voltages corresponding to the sensor groups, the sensor signals corresponding to the gear sensors in the sensor groups, and a current vehicle gear corresponding to the sensor groups, and the current vehicle gear is determined by using the sensor signals corresponding to the gear sensors in the sensor groups;
performing matching on the to-be-detected factors and/or the status duration based on a preset working condition; and
if the to-be-detected factors and/or the status duration meet the preset working condition, determining the fault detection result of the sensor group as a normal working state; or
if there is a to-be-detected factor and/or status duration that does not meet the preset working condition, determining the fault detection result of the sensor group as a fault state.

12. A vehicle gear control system, applied to a vehicle terminal, wherein the vehicle terminal comprises a plurality of sensor groups, the sensor group comprises gear sensors, and the system comprises:
a detection module, configured to separately perform fault detection on the sensor groups to obtain fault detection results of the sensor groups;
a determining module, configured to: if both a normal working state and a fault state exist in the fault detection results, determine a sensor group in a normal working state as a normal working group;
an obtaining module, configured to: obtain normal gear signals from the normal working group a plurality of times, and separately determine candidate vehicle gears corresponding to the normal gear signals from preset vehicle gears of the vehicle terminal, wherein the normal gear signal is obtained by collecting, in response to a gear shift operation corresponding to the vehicle terminal, sensor signals output by gear sensors in the normal working group; and
a control module, configured to determine a first shifted-to gear from the preset vehicle gears based on a comparison result between the candidate vehicle gears, to control the vehicle terminal to shift to the first shifted-to gear.

13. An electronic device, comprising a processor and a memory, wherein
the memory is configured to store a computer program, and the processor is configured to execute the computer program stored in the memory to enable the electronic device to perform the method according to any one of claims 1 to 11.

14. A computer-readable storage medium, storing a computer program, wherein
the method according to any one of claims 1 to 11 is implemented when the computer program is executed by a processor.
